**Europäisches Patentamt**

(19) **European Patent Office**

**Office européen des brevets**

(11) Numéro de publication: **0 006 821**
A2

(12) # DEMANDE DE BREVET EUROPEEN

(21) Numéro de dépôt: **79400449.9**

(22) Date de dépôt: **02.07.79**

(51) Int. Cl.³: **A 23 B 7/08, A 23 L 1/28**

(30) Priorité: **03.07.78 FR 7819775**

(43) Date de publication de la demande: **09.01.80**
**Bulletin 80/1**

(84) Etats contractants désignés: **AT BE CH DE GB IT LU
NL SE**

(71) Demandeur: **Delaveyne, Jean Albert Alexandre, 7 Quai
Georges Clémenceau, F-78380 Bougival (FR)**

(72) Inventeur: **Delaveyne, Jean Albert Alexandre, 7 Quai
Georges Clémenceau, F-78380 Bougival (FR)**

(74) Mandataire: **CASANOVA, André et al, Cabinet
Casanova et Akerman 23 Boulevard de Strasbourg,
F-75010 Paris (FR)**

(54) **Produit alimentaire de longue conservation à base de champignons confits.**

(57) L'invention concerne un produit alimentaire de longue conservation à base de champignons.

Ce produit est caractérisé en ce qu'il contient des champignons ayant subi un traitement de confisage.

Le produit selon l'invention trouve son application à l'échelon ménager ou industriel, notamment en cuisine, en pâtisserie, en confiserie et en glacerie.

EP 0 006 821 A2

ACTORUM AG

1

Produit alimentaire de longue conservation à base de champignons confits.

--------------------

La présente invention concerne un nouveau produit alimentaire de longue conservation à base de champignons.

La consommation des champignons est importante dans le monde car la plupart des espèces ont une teneur élevée en protéines et en certains éléments minéraux comme le phosphore, le potassium et le fer. De plus, les protéines des champignons contiennent l'ensemble des acides aminés indispensables à des taux élevés. Certaines vitamines, notamment celles du groupe B se trouvent aussi à forte dose chez les champignons. Tous ces éléments les rendent très intéressants du point de vue diététique et en outre, ils présentent un intérêt gastronomique qui est loin d'être négligeable.

Le problème qui toutefois se pose est celui de l'irrégularité saisonnière de la quantité de champignons disponible. Celà se produit bien évidemment pour les champignons "sauvages", c'est-à-dire récoltés dans les prés et les bois, mais également, bien que dans une moindre mesure, dans le cas des champignons cultivés, tels que le champignon de couche (Agaricus bisporus).

Pour pallier cet inconvénient, on a recours, pour conserver les champignons, à diverses méthodes telles que dessiccation, mise en conserve, lyophilisation etc... .

Le Demandeur a maintenant mis au point selon l'invention un nouveau produit alimentaire de longue conservation à base de champignons, ce produit étant obtenu par un traitement de confisage des champignons.

Selon l'invention, on soumet donc des champignons à un traitement de confisage, de préférence en présence d'un agent conservateur de couleur et d'arôme, tel que l'acide ascorbique, ce confisage s'effectuant habituellement par passage dans plusieurs sirops successifs jusqu'à une teneur en sucre appropriée qui est, par exemple de l'ordre de 60 % environ.

Le produit alimentaire selon l'invention peut, en fonction du taux de sucre qu'on y a incorporé et du traitement mécanique éventuel auquel on a soumis les champignons, se présenter sous forme de champignons au sirop, de confiture de champignons entiers ou émincés, de purée et analogues.

Lorsque l'on désire obtenir un produit ayant une certaine consistance, comme dans le cas d'une confiture, on incorpore, de préférence au dernier sirop, un gélifiant. On peut utiliser à cette fin tout gélifiant ou composition gélifiante alimentaire et notamment des polysaccharides tels que pectines, agars ou carraghénanes ou des galactomannanes.

Les produits alimentaires selon l'invention peuvent être préparés à partir des divers champignons comestibles consommés en France ou à l'étranger, que ces champignons soient cultivés industriellement ou récoltés dans leur biotope naturel.

Parmi les champignons de culture industrielle on peut ainsi utiliser les variétés du type Agaricus telles que Agaricus bisporus (campestris) ou Agaricus edulis, les pleurotes telles que Pleurotus ostreatus ou Pleurotus florida, les variétés du type Auricularia telles que Auricularia auric. Judae, les champignons du type Tricholomopsis edodes (shil-take), Flammulina velutipes, Volvariella volvaces etc... .

3

Parmi les champignons récoltés d'origine naturelle on citera des différentes variétés de cèpes et bolets, les lactaires, les tricholomes et les truffes.

On peut bien évidemment utiliser un mélange de deux ou plusieurs espèces de champignons.

Comme indiqué plus haut on soumet les champignons à un traitement de confisage, de préférence en présence d'un agent conservateur de couleur et d'arôme. A ce titre on peut notamment utiliser l'acide ascorbique, en quantité d'environ 0,01 à 1 %. On peut également utiliser les acides tartrique, citrique et lactique, ou tout autre conservateur ou antioxygène approprié.

On peut en outre associer aux champignons des ingrédients dont l'arôme convient à celui des produits préparés selon l'invention et plus particulièrement des agrumes, utilisés en tant que tels ou sous forme d'extraits, ou encore du gingembre. On obtient en particulier un excellent produit d'accompagnement du gibier en associant à des champignons de couche, auxquels on a rajouté une petite quantité d'épluchures de truffes, du citron vert et du gingembre.

Les produits alimentaires selon l'invention peuvent être conditionnés en bocaux de verre, boîtes métalliques et peuvent être utilisés à l'échelon ménager ou à l'échelon industriel. Ils trouvent ainsi une application en pâtisserie, en particulier à l'état de pâtes de champignons confits égouttés et broyés, pour la confection de glaces et de sorbets, comme additifs à des produits laitiers tels que fromages frais ou yoghourts, en confiserie notamment pour le fourrage de bonbons au chocolat.

L'exemple suivant illustre l'invention sans toutefois en limiter la portée.
EXEMPLE :

On nettoie les queues de 5 kg de champignons de couche puis on lave soigneusement ces champignons. On les met ensuite à tremper pendant 1 heure dans 5 litres d'eau contenant 10 g d'acide ascorbique puis on les égoutte à fond.

4

On prépare un sirop à l'aide de 3 litres d'eau auxquels on ajoute 20 g d'acide ascorbique, 1 kg de sucre et, si on le désire, 3 gousses de vanille. On porte à ébullition, on jette les champignons dans le sirop et on maintient à ébullition pendant quelques minutes, cette opération pouvant se faire sous vide. On laisse ensuite reposer pendant au moins 24 heures.

On égoutte à fond, on ajoute au sirop 500 g de sucre et on amène à ébullition. Comme précédemment on laisse les champignons pendant quelques minutes dans le sirop en ébullition puis on laisse reposer au moins 24 heures. On répète cette opération plusieurs fois jusqu'à obtention de la teneur en sucre désirée.

Dans le cas présent on obtient au bout du sixième bain une teneur en sucre (mesurée au réfractomètre) de 56 %.

Si on désire préparer un produit du type confiture on égoutte alors les champignons et on ajoute au sirop un gélifiant (par exemple de la pectine), on porte le sirop à ébullition et on y introduit les champignons que l'on a laissés entiers ou que l'on a émincés. On porte à nouveau à ébullition puis on laisse refroidir l'ensemble pour obtenir la confiture que l'on peut conditionner dans un bocal en verre, une boîte métallique ou analogue.

Bien entendu diverses modifications peuvent être apportées par l'homme de l'art aux produits et procédés qui viennent d'être décrits sans sortir du cadre de l'invention.

REVENDICATIONS DE BREVET

1.- Produit alimentaire de longue conservation à base de champignons confits caractérisé en ce qu'il consiste en champignons au sirop, confiture de champignons entiers ou émincés ou purée de champignons confits et est obtenu par traitement des champignons dans des sirops contenant un agent conservateur de couleur et d'arôme et éventuellement un gélifiant.

2.- Produit selon la revendication 1, caractérisé en ce que l'agent conservateur de couleur et d'arôme est l'acide ascorbique.

3.- Produit selon la revendication 1 ou 2, caractérisé en ce que le traitement de confisage est poursuivi jusqu'à une teneur en sucre de l'ordre de 60 %.

4.- Produit selon l'une quelconque des revendications 1 à 3, caractérisé en ce qu'on utilise comme champignons des champignons de couche.

5.- Produit selon l'une quelconque des revendications 1 à 4, caractérisé en ce qu'on utilise comme gélifiant de la pectine.

6.- Produit selon l'une quelconque des revendications 1 à 5, caractérisé en ce qu'il contient un agrume utilisé en tant que tel ou sous forme d'extrait.

7.- Produit selon l'une quelconque des revendications 1 à 6, caractérisé en ce qu'il contient du gingembre.